# EUROPÄISCHE PATENTSCHRIFT

(11) **EP 3 111 114 B1**
(45) Veröffentlichungstag und Bekanntmachung des Hinweises auf die Patenterteilung: **09.08.2017**
(21) Anmeldenummer: 14728122.4
(22) Anmeldetag: 23.05.2014
(51) Int. Cl.: F16J 15/06

(54) **FLANSCHDICHTUNG**
FLANGED GASKET
JOINT D'ÉTANCHÉITÉ DE COLLERETTE

(43) Veröffentlichungstag der Anmeldung: 04.01.2017
(73) Patentinhaber: VEGA Grieshaber KG, 77709 Wolfach (DE)
(72) Erfinder: LENK, Fritz, 77761 Schiltach (DE); SKOWAISA, Jürgen, 77761 Schiltach (DE)
(74) Vertreter: Westphal, Mussgnug & Partner Patentanwälte mbB
(86) Internationale Anmeldenummer: PCT/EP2014/060700
(87) Internationale Veröffentlichungsnummer: WO 2015/176774

(56) Entgegenhaltungen:
- EP-A1- 1 707 862

## Beschreibung

Die vorliegende Erfindung betrifft eine Flanschdichtung gemäß dem Oberbegriff des Patentanspruchs 1.

Aus dem Stand der Technik sind verschiedentlich Flanschdichtungen bekannt, die zwei Ringe, beispielsweise aus einem gummielastischen Werkstoff umfassen, die quer zur Ringachse keilförmig ausgebildet sind und an einander zugewandten Seiten senkrecht zur Ringachse über im Wesentlichen plane Flächen aneinandergrenzen und gegeneinander verdrehbar sind. Die aus dem stand der Technik bekannten Flanschdichtungen werden zum Ausgleich von Fluchtungsfehlern bei Flanschverbindungen von Rohren verwendet, um trotz des Fluchtungsfehlers eine hinreichende Dichtigkeit der Verbindungsstelle zu gewährleisten. Ähnliche Flanschdichtungen können auch bei der Befestigung von Füllstandmessgeräten oder dergleichen an Behältern, beispielsweise großen Lagertanks, zum Einsatz kommen. Ausgeglichen werden hierbei beispielsweise schräg verlaufende Tankoberseiten, nicht fluchtend angeschweißte Flansche oder eine Ausrichtung eines seitlich versetzt angeordneten Messgerätes zur Behältermitte hin.

Dadurch, dass die Flanschdichtung zwei Ringe umfasst, die quer zur Ringachse keilförmig ausgebildet sind und an einander zugekehrten Seiten senkrecht zur Ringachse über plane Flächen aneinander grenzen und dort verdrehbar miteinander in Eingriff stehen, lässt sich die Flanschdichtung zwischen einer Position, in der ihre Außenflächen im Wesentlichen radial und spiegelsymmetrisch zur Ringachse angeordnet sind (bei planen Außenflächen planparallel), und eine Position, in der ihre Außenflächen senkrecht zur Ringachse und spiegelsymmetrisch hierzu zu einen maximalen Spreizwinkel einnehmen, kontinuierlich verstellen. Die Position lässt sich einfach durch Verdrehen der beiden Ringe gegeneinander stufenlos einstellen. Ein Winkel, den die beiden Außenflächen einschließen wird in diesem Zusammenhang als Spreizwinkel bezeichnet, wobei bei planparallelen Außenflächen ein Spreizwinkel von 0° angenommen wird.

Eine entsprechende Flanschdichtung ist beispielsweise aus der EP 1 707 862 A1 bekannt.

Ferner sind aus dem Stand der Technik im Bereich der Füllstandmesstechnik sogenannte Spüleinrichtungen bekannt, bei denen beispielsweise in einem Behälter angeordnete Antennen mit einem Gas oder einer Flüssigkeit von Verunreinigungen befreit und/oder gekühlt werden.

Beim Einsatz von den vorgenannten Flanschdichtungen muss eine Spülvorrichtung aufwändig als zusätzliches Bauelement vorgesehen und in geeigneter Weise montiert werden. Dies wird als nachteilig empfunden.

Es ist die Aufgabe der vorliegenden Erfindung, eine aus dem Stand der Technik bekannte Flanschdichtung derart weiterzubilden, dass eine Platz sparende und kostengünstige Integration einer Spülvorrichtung möglich ist.

Diese Aufgabe wird durch eine Flanschdichtung mit den Merkmalen des Patentanspruchs 1 gelöst.

Eine erfindungsgemäße, vorzugsweise ringförmige Flanschdichtung mit zwei Ringen, die quer zur Ringachse keilförmig ausgebildet sind und an einander zugewandten Seiten senkrecht zur Ringachse über im Wesentlichen plane Flächen aneinander grenzen und gegeneinander verdrehbar sind, zeichnet sich dadurch aus, dass wenigstens einer der Ringe einen in Umfangsrichtung verlaufenden Kanal, eine nach außen führende Zuführung und wenigstens eine nach innen weisende Öffnung aufweisen.

Durch eine derartige Ausgestaltung wird in einfacher, Platz sparender und kostengünstiger Weise ermöglicht, von außen ein Fluid zur Kühlung zuzuführen und mit wenigstens einer nach innen weisende Öffnung in Richtung eines Messgerätes oder Antenne abzugeben. Auf diese Weise kann eine Spülvorrichtung besonders geschickt mit einer Flanschdichtung kombiniert werden.

Vorzugsweise ist der in Umfangsrichtung verlaufende Kanal als Ringkanal, das heißt als vollständig umlaufender und geschlossener Kanal ausgebildet. Auf diese Weise können über den gesamten Innenumfang an der Flanschdichtung Spülöffnungen verteilt angeordnet werden, sodass eine effektive Spülung und/oder Kühlung ermöglicht wird.

Eine einfache Ausbildung der Zuführung kann durch eine radial verlaufende Bohrung, vorzugsweise mit einem Innengewinde, erreicht werden, wobei in der Zuführung optional ein Rückschlagventil zur Vermeidung eines Austretens von Medien aus dem mit der Flanschdichtung kontaktierten Behälter vorgesehen werden kann.

Wie bereits dargelegt, kann eine effektive Spülung und/oder Kühlung besonders gut durch eine Vielzahl von Öffnungen, die beispielsweise gleich verteilt über den Innenumfang der Flanschdichtung angeordnet sein können, erreicht werden.

Die Öffnungen können vorzugsweise als Bohrungen oder Nuten ausgebildet sein, was eine einfache Herstellung gewährleistet.

Um eine Undichtigkeit zwischen den Ringen der Flanschdichtung zu vermeiden, kann wenigstens eine erste Dichtung vorgesehen sein, die zu dem Kanal radial nach außen versetzt angeordnet ist. Auf diese Weise kann zwar ein in dem Tank befindliches Medium, beispielsweise ein Gas, bis in den Kanal der Flanschdichtung vordringen, wird dort aber einerseits durch das Rückschlagventil und andererseits durch die zwischen den Ringen angeordnete erste Dichtung an einem Austreten in die Umgebung gehindert.

Um eine Dichtigkeit der Flanschdichtung insgesamt zu gewährleisten, ist es günstig, wenn an wenigstens einer, vorzugsweise an beiden in Richtung der Ringachse orientierten Außenflächen wenigstens eine zweite Dichtung angeordnet ist. Die zweite Dichtung kann dabei insbesondere als Flachdichtung, als O-Ring oder als Gummierung der Oberfläche ausgebildet sein.

Durch die zweite Dichtung wird eine effiziente Abdichtung zwischen beispielsweise einem Gehäuseflansch und einem Geräteflansch erreicht, sodass ein Austreten von Medium gut verhindert werden kann.

Je nach eingesetztem Material für die Flanschdichtung ist es sinnvoll, die zweite Dichtung als Flachdichtung, als O-Ring oder als Gummierung des Materials zur Flanschdichtung auszugestalten. Insbesondere Flachdichtungen und O-Ringe können in umlaufend vorgesehenen Nuten angeordnet und damit in einer Flanschdichtung gehaltert sein.

Eine besonders einfache Ausgestaltung des Kanals kann erreicht werden, wenn dieser als Nut in wenigstens einer der einander zugewandten Flächen senkrecht zur Ringachse ausgebildet ist. Eine solche Nut kann einfach, beispielsweise durch einen Fräsvorgang oder bereits bei einem Spritzgießvorgang des Ringes eingebracht werden. Durch eine derartige Ausgestaltung können insbesondere aufwändige Bearbeitungsschritte zur Erzeugung von Hohlkanälen vermieden werden.

Eine weiter vereinfachte Ausgestaltung ergibt sich, wenn die Nut eine mit steigender Keilhöhe zunehmende Tiefe aufweist. Auf diese Weise wird eine konstante Dicke des unterhalb der Nut angeordneten Materials erreicht, wodurch insbesondere nach einem Zusammenfügen der Ringe die Öffnungen mit einer konstanten Höhe angeordnet werden können.

Alternativ kann die Nut eine konstante Tiefe aufweisen, wobei dabei in Kauf genommen werden muss, dass die Öffnungen lediglich auf einer schräg verlaufenden Ringlinie angeordnet werden können.

In einer bevorzugten Ausgestaltungsform weisen beide Ringe korrespondierend zueinander ausgebildete Nuten mit wenigstens an einer Nutoberseite übereinstimmender Breite auf, sodass der Kanal durch ein Zusammenwirken der beiden Nuten nach einem Zusammenfügen der Ringe zur Flanschdichtung gebildet wird. Auf diese Weise kann ein erhöhter Kanalquerschnitt erreicht werden, wodurch ein erhöhter Fluiddurchsatz ermöglicht wird. Ferner wird durch eine übereinstimmende Nutbreite erreicht, dass ein im Wesentlichen nahtloser Übergang von dem einen zu dem anderen Ring erreicht wird, was insbesondere eine Montage vereinfacht.

Eine zentrierte Ausrichtung der beiden Ringe relativ zueinander kann besonders einfach erreicht werden, wenn einer der Ringe eine zentrierte Nut und der andere der Ringe eine korrespondierend ausgebildete Zentrierfeder, das heißt einen korrespondierend zu der Nut ausgebildeten Steg, aufweist, sodass die Ringe zentriert und relativ zueinander verdrehbar sind.

Eine einfache Handhabbarkeit und Montage der Flanschdichtung kann erreicht werden, wenn die Ringe miteinander in Schnappeingriff stehen und dadurch nach einer erstmaligen Montage aneinander gehaltert sind. Es wird auf diese Weise eine Fehlbedienung der vorliegenden Flanschdichtung vermieden.

Die in Richtung der Ringachse voneinander weg orientierten Außenflächen der Flanschdichtung können plan ausgebildet oder mit einem Radius versehen sein. Abhängig von einem abzudichtenden Druck ist es somit einerseits möglich, bei planen Flächen, insbesondere unter Verwendung von zusätzlichen Dichtungen, eine Dichtigkeit auch gegenüber hohen Drücken herzustellen, wobei andererseits mit einer balligen Oberfläche, die beispielsweise mit einer Gummierung versehen sein kann, besonders einfach eine Abdichtung für niedrigere Drücke erreicht werden kann.

Besonders günstige Ausgestaltungen der Flanschdichtung können erreicht werden, wenn die Ringe aus Kunststoff, vorzugsweise Polypropylen (PP), Polyvinylchlorid (PVC) oder Polyvinylidenfluorid (PVDF) ausgebildet sind. Um eine entsprechende Stabilität der aus Kunststoff gebildeten Ringe zu erreichen, können diese vorzugsweise mit einer Verstärkungseinlage, beispielsweise aus Glas- oder Kohlefasern, gefüllt und stabilisiert sein. Alternativ können die Ringe aus Metall, vorzugsweise Edelstahl oder Aluminium gebildet sein, was eine hochpräzise Fertigung sowie eine gute Abdichtung gegenüber hohen Drücken ermöglicht. Alternativ können auch Kombinationen der vorgenannten Materialien zum Einsatz kommen, beispielsweise können die Ringe aus Kunststoff gefertigt und mit einer entsprechenden Einlage aus Metall stabilisiert sein.

In einer Weiterbildung der Erfindung ist eine Feststellvorrichtung, bspw. eine Feststellschraube, ein Klemmblock oder ein geeignetes anderes Feststellmittel, vorgesehen, mittels derer eine Ausrichtung der beiden Ringe relativ zueinander fixierbar ist.

Auf diese Weise kann eine nachträgliche Verstellung der beiden Ringe relativ zueinander und damit eine Verstellung des eingestellten Spreizwinkels vermieden werden.

Um einen besonders einfachen Einsatz der Flanschdichtung zu ermöglichen und um ggf. gewünschte Montagewinkel genau einstellen zu können, kann es vorteilhaft sein, wenn an einem der Ringe außenseitig eine Skala angebracht ist, mittels derer der durch Verdrehen der Ringe relativ zueinander eingestellte Spreizwinkel, d.h. der von den in Axialrichtung voneinander wegorientierten Flächen eingeschlossene Winkel einstellbar und ablesbar ist.

Die vorliegende Erfindung wird nachfolgend unter Bezugnahme auf die beigefügten Figuren eingehend erläutert.

Es zeigen:
- Fig. 1: eine perspektivische Darstellung eines ersten Ausführungsbeispiels einer Flanschdichtung,
- Fig. 2a: einen Querschnitt durch die Flanschdichtung aus Figur 1,
- Fig. 2b: den Querschnitt aus Figur 2a bei maximalem Spreizwinkel,
- Fig. 3: ein zweites Ausführungsbeispiel einer Flanschdichtung im Querschnitt, und
- Fig. 4: die Flanschdichtung aus Figur 1 mit dran angeordneter Skala.

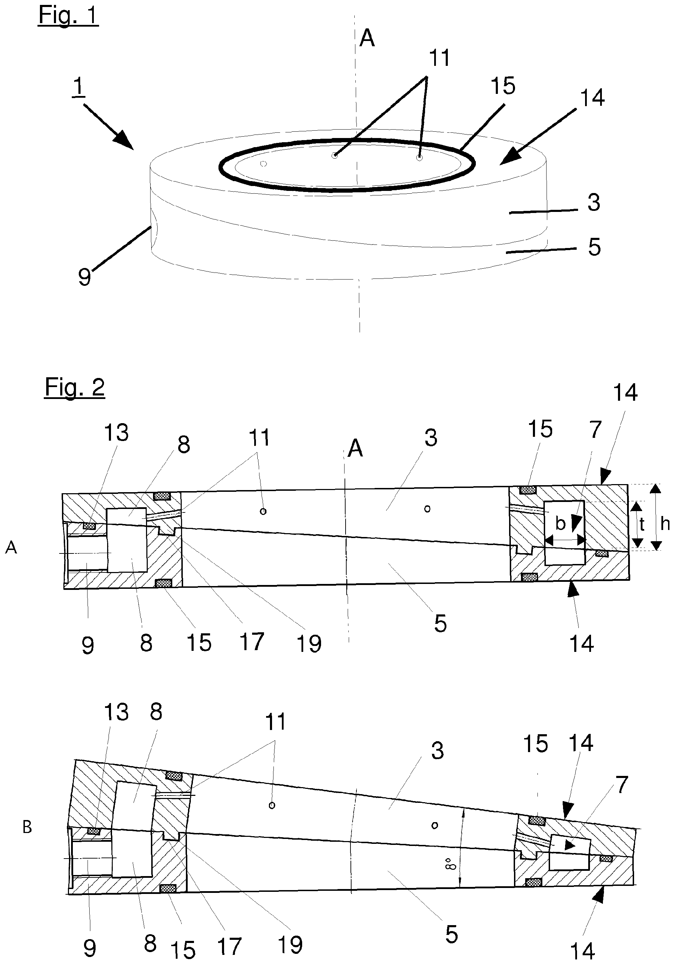

Fig. 1 zeigt eine perspektivische Darstellung eines ersten Ausführungsbeispiels einer Flanschdichtung 1. Die Flanschdichtung 1 ist aus einem ersten Ring 3 und einem zweiten Ring 5 aufgebaut, die beide korrespondierend zueinander und keilförmig ausgebildet sind. Der erste Ring 3 und der zweite Ring 5 sind konzentrisch zueinander angeordnet und grenzen an einander zugewandten Seiten über im Wesentlichen plane Flächen aneinander, wobei sie relativ zueinander verdrehbar miteinander verbunden sind.

In dem zweiten Ring 5 ist eine Zuführung 9 vorgesehen, die vorliegend als Bohrung ausgebildet ist, die in einen Ringkanal 7, der zwischen dem ersten Ring 3 und dem zweiten Ring 5 gebildet ist, mündet. Innenseitig weist der erste Ring 3 eine Mehrzahl von Öffnungen 11, die vorliegend ebenfalls als Bohrungen ausgebildet sind, auf. Die Öffnungen 11 münden ebenfalls in den Ringkanal 7, so dass über die Zuführung 9 Fluid in den Ringkanal 7 zugeführt und durch die Öffnungen 11 abgegeben werden kann. In der Zuführung 9 kann optional ein Rückschlagventil 10 vorgesehen sein, so dass ein Zurückströmen von Fluid und/oder ein Entweichen von Druck aus einem mit der Flanschdichtung 1 abgedichteten Behälter vermieden wird.

In der Darstellung in Fig. 1 ist außerdem zu erkennen, dass die Flanschdichtung 1 an ihren in Richtung der Ringachse A voneinander wegweisenden Außenflächen 14 zweite Dichtungen 15 aufweist, die eine Dichtigkeit in Richtung der in der vorliegenden Darstellung oberhalb und unterhalb der Flanschdichtung 1 angeordneten Flansche herstellen. Die in diesem Ausführungsbeispiel dargestellte zweite Dichtung 15 ist als O-Ring oder als Flachdichtung ausgeführt.

Fig. 2a zeigt einen Querschnitt durch die Flanschdichtung 1 aus Fig. 1. In diesem Querschnitt ist besonders gut die Ausgestaltung des Ringkanals 7 sowie die Befestigung der Ringe 3, 5 aneinander zu erkennen.

In Fig. 2a sind der erste Ring 3 und der zweite Ring 5 so zueinander angeordnet, dass sich ein Spreizwinkel von 0° ergibt. Unter einem Spreizwinkel von 0° wird in der vorliegenden Anmeldung eine planparallele Ausrichtung in Richtung der Ringachse A voneinander weg orientierten Außenflächen 14 verstanden.

Der Ringkanal 7 ist im vorliegenden Ausführungsbeispiel durch zwei korrespondierend zueinander ausgebildete Nuten 8 gebildet. Die Nuten 8 sind im vorliegenden Ausführungsbeispiel mit einer mit zunehmender Keilhöhe h zunehmenden Tiefe t ausgebildet, so dass eine unterhalb der Nuten 8 verlaufende Wandstärke im Wesentlichen konstant ist. Die Nuten 8 im ersten Ring 3 und im zweiten Ring 5 sind mit identischer Breite b und übereinstimmendem radialen Abstand ausgebildet, so dass durch die Nuten 8 der umlaufende Ringkanal 7 gebildet ist. Ausgehend von dem Ringkanal 7 sind in dem ersten Ring 3 innenseitig Bohrungen vorgesehen, die die Öffnungen 11 bilden.

An den in Richtung der Ringachse A voneinander wegweisenden Außenflächen 14 sind in umlaufenden Nuten die zweiten Dichtungen 15 angeordnet, so dass ober- und unterseitig eine Abdichtung zu angrenzenden Flanschen hergestellt werden kann. Die beiden Ringe 3, 5 sind über eine Zentriernut 17 in dem zweiten Ring 5 und eine Zentrierfeder 19 in dem ersten Ring 3 relativ zueinander zentriert und drehbar miteinander verbunden. Die Zentriernut 17 und Zentrierfeder 19 können beispielsweise auch als Schnappeingriff ausgebildet sein, so dass die beiden Ringe 3, 5 in Richtung der Ringachse A aneinander fixiert und dennoch relativ zueinander drehbar sind.

Um ein Austreten von Fluid aus der Flanschdichtung 1 zu verhindern und auch eine Druckdichtigkeit der Flanschdichtung 1 zu gewährleisten, ist zwischen dem ersten Ring 3 und dem zweiten Ring 5 eine erste Dichtung 13 vorgesehen, die relativ zu dem Ringkanal 7 radial nach außen versetzt angeordnet ist. Im vorliegenden Ausführungsbeispiel ist die erste Dichtung 13 in einer umlaufenden Nut des zweiten Rings 5 angeordnet und als O-Ring ausgebildet. Es können aber auch andere geeignete Möglichkeiten zur Abdichtung ausgewählt werden.

Fig. 2b zeigt den Querschnitt aus Fig. 2a, wobei die beiden Ringe 3, 5 so zueinander ausgerichtet sind, dass Sie den maximal möglichen Spreizwinkel, der vorliegend 8° beträgt, bilden. Aus der vorliegenden Darstellung ist zu erkennen, dass der erste Ring 3 im Vergleich zu der Darstellung in Fig. 2a um 180° um die Ringachse A gedreht ist, so dass die beiden Keile gleich orientiert aufeinander liegen. Auf diese Weise können Fluchtungsfehler von Flanschen oder von einer Senkrechten abweichende Ausrichtungen für Messgeräte kompensiert oder eingestellt werden.

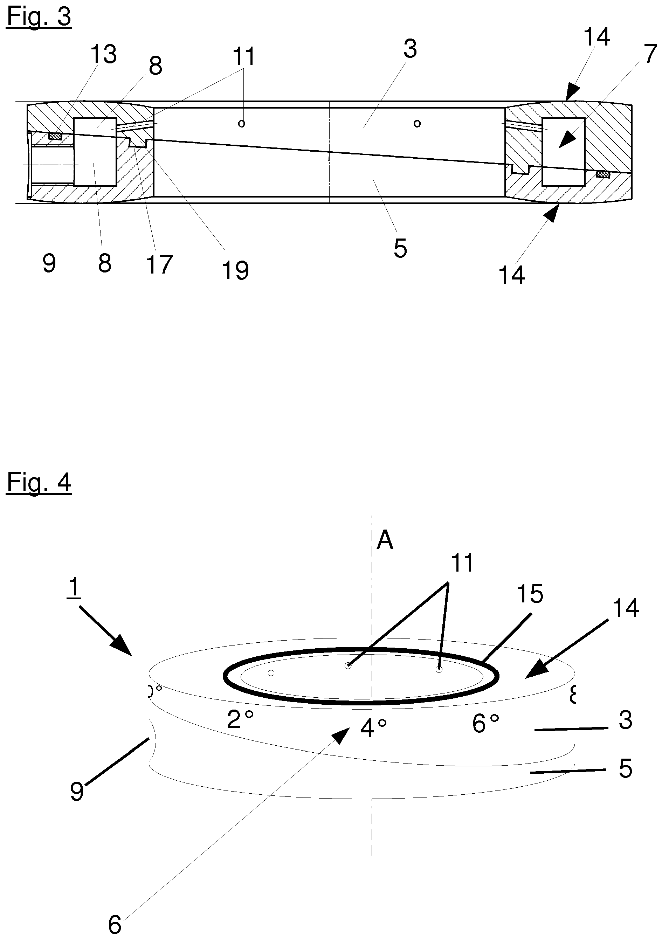

Fig. 3 zeigt ein zweites Ausführungsbeispiel einer Flanschdichtung 1, wobei sich das Ausführungsbeispiel gemäß Fig. 3 von dem Ausführungsbeispiel der Fig. 1 und 2 lediglich dadurch unterscheidet, dass es mit ballig ausgebildeten Außenflächen 14 versehen ist. Wie Fig. 3 entnommen werden kann, sind die Außenflächen 14 bei diesem Ausführungsbeispiel mit einem Radius versehen und optional mit einer abdichtenden Oberflächenbeschichtung, beispielsweise einer Gummierung versehen. Durch eine derartige Ausgestaltung wird eine vereinfachte Handhabung der Flanschdichtung 1 ermöglicht, wobei jedoch eine Dichtigkeit nur für geringere Drücke im Vergleich zu dem Ausführungsbeispiel aus den Fig. 1 und 2 erreicht werden kann. Das Ausführungsbeispiel gemäß Fig. 3 kann beispielsweise aus Kunststoff hergestellt sein, wobei das Ausführungsbeispiel aus den Fig. 1 und 2 vorzugsweise aus Edelstahl hergestellt ist. Die ballige Oberfläche der Außenflächen 14 sowie deren Beschichtung kann beispielsweise in einem Zwei-Komponenten-Spritzgussverfahren besonders günstig hergestellt werden, so dass hierdurch eine besonders kostengünstige Ausgestaltungsvariante einer Flanschdichtung erreicht werden kann.

Figur 4 zeigt die Flanschdichtung 1 aus Figur 1 mit einer zusätzlich an einem der Ringe 3, 5 angeordneten Skala 6. Die Skala 6 zeigt einerseits den von den beiden voneinander wegweisenden Außenflächen 14 eingeschlossenen Spreizwinkel an und kann außerdem eine Verhältnis von Höhe zu seitlichem Versatz eines Behälters angeben, sodass ohne zusätzliche Berechnungen eine Ausrichtung eines exzentrisch montierten Füllstandmessgerätes auf ein Zentrum des Behälters in Bodennähe erfolgen kann.

Eine solche Skala 6 kann bspw. aufgeklebt, aufgedruckt oder in das Material eines der Ringe 3, 5 eingearbeitet, bspw. eingraviert, eingespritzt oder eingegossen sein.

### Bezugszeichenliste

- 1: Flanschdichtung
- 3: erster Ring
- 5: zweiter Ring
- 6: Skala
- 7: Kanal/Ringkanal
- 8: Nut
- 9: Zuführung/Bohrung

- 10: Rückschlagventil
- 11: Öffnung
- 13: erste Dichtung
- 14: Außenfläche
- 15: zweite Dichtung
- 17: Zentriernut
- 19: Zentrierfeder

- A: Ringachse
- b: Breite
- t: Tiefe
- h: Höhe

## Patentansprüche

1. Ringförmige Flanschdichtung (1) mit zwei Ringen (3, 5), die quer zur Ringachse (A) keilförmig ausgebildet sind und an einander zugewandten Seiten senkrecht zur Ringachse (A) über im Wesentlichen plane Flächen aneinander grenzen und gegeneinander verdrehbar sind,
**dadurch gekennzeichnet, dass**
wenigstens einer der Ringe (3, 5) einen in Umfangsrichtung verlaufenden Kanal (7), eine nach außen führende Zuführung (9) und wenigstens eine nach innen weisende Öffnung (11) aufweist.

2. Flanschdichtung (1) nach Anspruch 1,
**dadurch gekennzeichnet, dass**
der in Umfangsrichtung verlaufende Kanal (7) als Ringkanal ausgebildet ist.

3. Flanschdichtung (1) nach einem der vorhergehenden Ansprüche,
**dadurch gekennzeichnet, dass**
die Zuführung (9) als radial verlaufende Bohrung (9) ausgebildet ist und vorzugsweise ein Rückschlagventil (10) aufweist.

4. Flanschdichtung (1) nach einem der vorhergehenden Ansprüche,
**dadurch gekennzeichnet, dass**
eine Vielzahl von Öffnungen (11) vorgesehen ist, die vorzugsweise als Bohrungen oder Nuten ausgebildet sind..

5. Flanschdichtung (1) nach einem der vorhergehenden Ansprüche,
**dadurch gekennzeichnet, dass**
zwischen den Ringen (3, 5) wenigstens eine erste Dichtung (13) vorgesehen ist, die zu dem Kanal (7) radial nach außen versetzt angeordnet ist.

6. Flanschdichtung (1) nach einem der vorhergehenden Ansprüche,
**dadurch gekennzeichnet, dass**
an wenigstens einer vorzugsweise an beiden in Richtung der Ringachse (A) orientierten Außenflächen (14) wenigstens eine zweite Dichtung (15) angeordnet ist.

7. Flanschdichtung (1) nach Anspruch 6,
**dadurch gekennzeichnet, dass**
die zweite Dichtung (15) als Flachdichtung, als O-Ring oder als Gummierung ausgebildet ist.

8. Flanschdichtung (1) nach einem der vorhergehenden Ansprüche,
**dadurch gekennzeichnet, dass**
der Kanal (7) als Nut (8) ausgebildet ist.

9. Flanschdichtung (1) nach Anspruch 8,
**dadurch gekennzeichnet, dass**
die Nut (8) eine mit steigender Keilhöhe (h) zunehmende Tiefe (t) aufweist.

10. Flanschdichtung (1) nach Anspruch 8,
**dadurch gekennzeichnet, dass**
die Nut (8) eine konstante Tiefe (t) aufweist.

11. Flanschdichtung (1) nach Anspruch 9 oder 10,
**dadurch gekennzeichnet, dass**
beide Ringe (3, 5) korrespondierend zueinander ausgebildete Nuten (8) mit wenigstens an einer Nutoberseite übereinstimmender Breite (b) aufweisen.

12. Flanschdichtung (1) nach einem der vorhergehenden Ansprüche,
**dadurch gekennzeichnet, dass**
einer der Ringe (3, 5) eine Zentriernut (17) und der andere eine korrespondierend ausgebildete Zentrierfeder (19) aufweist, sodass die Ringe (3, 5) zentriert und relativ zueinander verdrehbar sind.

13. Flanschdichtung (1) nach einem der vorhergehenden Ansprüche,
**dadurch gekennzeichnet, dass**
die Ringe (3, 5) miteinander in Schnappeingriff stehen.

14. Flanschdichtung (1) nach einem der vorhergehenden Ansprüche,
**dadurch gekennzeichnet, dass**
die in Richtung der Ringachse (A) voneinander weg orientierten Außenflächen (14) plan ausgebildet oder mit einem Radius versehen sind.

15. Flanschdichtung (1) nach einem der vorhergehenden Ansprüche,
**dadurch gekennzeichnet, dass**
die Ringe (3, 5) aus Kunststoff, vorzugsweise mit einer Verstärkungseinlage, oder Metall oder einer Kombination daraus gefertigt sind.

## Claims

1. Annular flange seal (1) having two rings (3, 5) which are formed to be wedge-shaped transversely to the ring axis (A) and adjoin each other on sides facing one another perpendicularly to the ring axis (A) over substantially flat surfaces and can be rotated with respect to one another,
**characterised in that**
at least one of the rings (3, 5) has a channel (7) extending in the peripheral direction, a feed (9) leading towards the outside and at least one opening (11) which faces inwards.

2. Flange seal (1) according to claim 1,
**characterised in that**
the channel (7) extending in the peripheral direction is formed as a ring channel.

3. Flange seal (1) according to one of the preceding claims,
**characterised in that**
the feed (9) is formed as a radially extending bore (9) and preferably has a non-return valve (10).

4. Flange seal (1) according to one of the preceding claims,
**characterised in that**
a plurality of openings (11) are provided which are preferably formed as bores or grooves.

5. Flange seal (1) according to one of the preceding claims,
**characterised in that**
at least one first seal (13) is provided between the rings (3, 5), said seal (13) being arranged offset radially outwards relative to the channel (7).

6. Flange seal (1) according to one of the preceding claims,
**characterised in that**
at least one second seal (15) is arranged on at least one, preferably on both, outer surfaces (14) orientated in the direction of the ring axis (A).

7. Flange seal (1) according to claim 6,
**characterised in that**
the second seal (15) is formed as a flange seal, as an O-ring seal or as a rubber coating.

8. Flange seal (1) according to one of the preceding claims,
**characterised in that**
the channel (7) is formed as a groove (8).

9. Flange seal (1) according to claim 8,
**characterised in that**
the groove (8) has a depth (t) which increases with increasing wedge height (h).

10. Flange seal (1) according to claim 8,
**characterised in that**
the groove (8) has a constant depth (t).

11. Flange seal (1) according to claim 9 or 10,
**characterised in that**
both rings (3, 5) have grooves (8) which are formed to correspond to one another and which have a corresponding width (b) at least on a groove upper side.

12. Flange seal (1) according to one of the preceding claims,
**characterised in that**
one of the rings (3, 5) has a centring groove (17) and the other has a centring spring (19) which is correspondingly formed, such that the rings (3, 5) are centred and can be rotated relative to each other.

13. Flange seal (1) according to one of the preceding claims,
**characterised in that**
the rings (3, 5) are in snap engagement with each other.

14. Flange seal (1) according to one of the preceding claims,
**characterised in that**
the outer surfaces (14) which are orientated in the direction of the ring axis (A) away from one another are formed to be flat or are provided with a radius.

15. Flange seal (1) according to one of the preceding claims,
**characterised in that**
the rings (3, 5) are produced from plastic, preferably with a reinforcing insert, or metal or a combination thereof.

## Revendications

1. Joint d'étanchéité de collerette (1) de forme annulaire avec deux anneaux (3, 5), qui ont une forme de coin transversalement à l'axe (A) des anneaux et sont délimités par les faces tournées l'une vers l'autre perpendiculairement à l'axe (A) des anneaux, par des surfaces essentiellement planes adjacentes et qui peuvent tourner l'une par rapport à l'autre,
**caractérisé en ce qu'**
au moins l'un des anneaux (3, 5) a un canal (7) dans la direction périphérique, une alimentation (9) débouchant à l'extérieur et au moins une ouverture (11) tournée vers l'intérieur.

2. Joint d'étanchéité (1) de collerette selon la revendication 1,
**caractérisé en ce que**
le canal (7) passant dans la direction périphérique est en forme de canal annulaire.

3. Joint d'étanchéité (1) de collerette selon l'une des revendications précédentes,
**caractérisé en ce que**
l'alimentation (9) est un perçage (9) orienté radialement et il comporte de préférence un clapet anti-retour (10).

4. Joint d'étanchéité (1) de collerette selon l'une des revendications précédentes,
**caractérisé en ce qu'**
il comporte plusieurs orifices (11) qui sont de préférence réalisés sous la forme de perçages ou de rainures.

5. Joint d'étanchéité (1) de collerette selon l'une des revendications précédentes,
**caractérisé par**
au moins un premier joint (13) entre les anneaux (3, 5), ce joint étant décalé radialement vers l'extérieur par rapport au canal (7).

6. Joint d'étanchéité (1) de collerette selon l'une des revendications précédentes,
**caractérisé en ce qu'**
au moins l'une des surfaces extérieures (14) et de préférence les deux surfaces extérieures (14) orientées dans la direction de l'axe annulaire (A) ont au moins un second joint (15).

7. Joint d'étanchéité (1) de collerette selon la revendication 6,
**caractérisé en ce que**
le second joint (15) est un joint plat, un joint torique ou un gommage.

8. Joint d'étanchéité (1) de collerette selon l'une des revendications précédentes,
**caractérisé en ce que**
le canal (7) est réalisé sous la forme d'une rainure (8).

9. Joint d'étanchéité (1) de collerette selon la revendication 8,
**caractérisé en ce que**
la rainure (8) a une profondeur (t) qui augmente dans le sens de la hauteur croissante (h) de la forme de coin.

10. Joint d'étanchéité (1) de collerette selon la revendication 8, **caractérisé en ce que**
la rainure (8) a une profondeur (t) constante.

11. Joint d'étanchéité (1) de collerette selon la revendication 9 ou 10,
**caractérisé en ce que**,
les deux anneaux (3, 5) ont des rainures (8) qui se correspondent avec au moins une largeur (b) qui se correspond au niveau de la surface supérieure de la rainure.

12. Joint d'étanchéité (1) de collerette selon l'une des revendications précédentes,
**caractérisé en ce que**,
l'un des anneaux (3, 5) a une rainure de centrage (17) et l'autre une languette de centrage (19) de forme correspondante de façon que les anneaux (3, 5) puissent tourner l'un par rapport à l'autre en étant centrés.

13. Joint d'étanchéité (1) de collerette selon l'une des revendications précédentes,
**caractérisé en ce que**,
les anneaux (3, 5) sont en prise l'un avec l'autre par enclipsage.

14. Joint d'étanchéité (1) de collerette selon l'une des revendications précédentes,
**caractérisé en ce que**,
les surfaces extérieures (14) qui sont orientées en opposition l'une de l'autre dans la direction de l'axe (A) de l'anneau sont planes ou ont un rayon de courbure.

15. Joint d'étanchéité (1) de collerette selon l'une des revendications précédentes,
**caractérisé en ce que**,
les anneaux (3, 5) sont en matière plastique, de préférence avec un insert de renfort ou en métal ou une combinaison de ces matières.
